# EUROPÄISCHE PATENTSCHRIFT

(11) **EP 1 177 683 B1**
(45) Veröffentlichungstag und Bekanntmachung des Hinweises auf die Patenterteilung: **08.04.2009**
(21) Anmeldenummer: 01917023.2
(22) Anmeldetag: 23.02.2001
(51) Int. Cl.: H04N 5/225

(54) **LICHTSCHACHT ZUR VERWENDUNG AN EINER DIGITALKAMERA**
FOCUSING HOOD FOR USE ON A DIGITAL CAMERA
PUITS DE LUMIERE DESTINE A UN APPAREIL PHOTO NUMERIQUE

(30) Priorität: 23.02.2000 DE 10009545
(43) Veröffentlichungstag der Anmeldung: 06.02.2002
(73) Patentinhaber: Müller, Jochen, 82166 Gräfelfing (DE)
(72) Erfinder: Müller, Jochen, 82166 Gräfelfing (DE)
(74) Vertreter: Wiese, Gerhard
(86) Internationale Anmeldenummer: PCT/EP2001/002102
(87) Internationale Veröffentlichungsnummer: WO 2001/063913

(56) Entgegenhaltungen:
- US-A- 2 054 442
- US-A- 4 381 892
- PATENT ABSTRACTS OF JAPAN vol. 1998, no. 12, 31. Oktober 1998 (1998-10-31) -& JP 10 200794 A (MATSUSHITA ELECTRIC IND CO LTD), 31. Juli 1998 (1998-07-31)
- PATENT ABSTRACTS OF JAPAN vol. 1999, no. 10, 31. August 1999 (1999-08-31) -& JP 11 136546 A (KYOCERA CORP), 21. Mai 1999 (1999-05-21)
- PATENT ABSTRACTS OF JAPAN vol. 1998, no. 08, 30. Juni 1998 (1998-06-30) -& JP 10 062840 A (MINOLTA CO LTD), 6. März 1998 (1998-03-06)

## Beschreibung

Die Erfindung betrifft einen Lichtschacht zur Verwendung an einer Digitalkamera mit Flüssigkristallbildschirm (im folgenden "LCD-Bildschirm"), der im Oberbegriff des Patentanspruchs 1 genannten Art.

Der LCD-Bildschirm einer Digitalkamera dient sowohl der Kameraführung bei der Bildaufnahme, funktionell also als klassischer Sucher, als auch der Betrachtung und Begutachtung bereits aufgenommener, also bereits in der Kamera abgespeicherter Bilder. Diese Doppelfunktion hat dazu geführt, dass die LC-Anzeigeflächen im Verlaufe der Entwicklung der Digitalkamera ständig größer wurden und zum Zeitpunkt des für die vorliegende Anmeldung maßgeblichen Prioritätstages bei einem typischen Wert von kaum unter 20 cm² liegen.

Der LCD-Bildschirm einer Digitalkamera ist typischerweise auf der Rückwand eines Kameragehäuses oder Kameragehäuseteils so angeordnet, dass die Anzeigefläche des LCD-Bildschirms mehr oder minder bündig in der Rückwandebene liegt. Er ist in dieser Anordnung jederzeit leicht zugänglich. Dabei hat sich diese Anordnung jedoch stets dann als durchaus problematisch erwiesen, wenn die Digitalkamera in Gegen-wart starker Lichtquellen, beispielsweise also bei hellen Sonnentagen im Freien oder in Gegenwart starker Scheinwerfer in geschlossenen Räumen, eingesetzt werden soll. Selbst ein weitgehend entspiegelter LCD-Bildschirm bleibt bei solchen Umgebungslichtverhältnissen noch so stark reflektierend, dass das meist ohnehin nicht intensive LCD-Bild praktisch nicht mehr erkennbar ist. Dies mag zwar bei der Begutachtung bereits abgespeicherter Kameraaufnahmen mit dem LCD-Bildschirm durch Abschatten mit einer freien Hand zumindest soweit korrigierbar sein, dass das angezeigte Bild erkennbar wird, bei der Benutzung des LCD-Bildschirms als Sucher im klassischen Sinne kann jedoch auf diese Weise keine Abhilfe geschaffen werden, da die Kamera sonst nicht mehr in Vorbereitung einer Aufnahme mit zwei Händen gehalten werden kann.

Digitalkameras sind daher in der Regel neben dem LCD-Bildschirm zusätzlich mit einem herkömmlichen optischen Sucher ausgestattet. Dieser weist jedoch nicht nur den Nachteil auf, die Baukosten der Digitalkamera weiter zu verteuern, sondern vor allem auch den aufnahmetechnischen Nachteil, dass diese im Nahbereich - in dem die Digitalkameras besonders leistungsfähig sind - wegen der Parallaxe zwischen Aufnahmeobjektiv und Sucher praktisch unbrauchbar sind. Gleiches gilt für die Verwendung von brennweitenverlängernden oder - verkürzenden Objektiworsätzen, die den optischen Sucher zumindest teilweise überdecken.

Die gleichen Nachteile weisen auch Digitalkameras auf, bei denen statt des separaten optischen Suchers ein Schwenkspiegelmechanismus nach Art der Spiegelreflexkameras verwendet wird. Auch bei dieser Bauweise kann der Fotograf nur das Panorama vor dem Objektiv der Kamera begutachten, wenn auch durch die Aufnahmelinse statt durch einen separaten optischen Sucher. Er ist jedoch auch durch einen Schwenkspiegel nicht in der Lage, das in der Kamera vorgespeicherte Bild selbst bereits vor dem endgültigen Speichern zu begutachten. Elektronische Sucher haben den Nachteil, das sie nur ein für die Bildgestaltung wenig geeignetes, sehr grob gerastertes Bild liefern. Für den Berufsfotografen sind also weder der zusätzliche optische Sucher, noch das Spiegelreflexprinzip befriedigende Lösungen für das Problem der in Gegenwart von hellem Streulicht nicht mehr erkennbaren LCD-Anzeige des LCD-Bildschirms.

Ein weiterer Nachteil der nur mit einem LCD-Bildschirm ausgerüsteten Digitalkameras ist außerdem eines ihrer wichtigsten positiven und ansprechenden Merkmale, nämlich die selbst für extrem leistungsfähige Digitalkameras ausgesprochen leichte und von den Abmessungen her kleine Bauweise. Für professionelle Aufnahmen lassen sich derartig kleine Digitalkameras, die nur mit einem LCD-Bildschirm ausgerüstet sind, jedoch nicht mehr in Verbindung mit beiden Händen durch Abstützen am Kopf des Fotografen in Form einer stabilen Dreipunkt-Auflage stabilisieren.

Ausgehend von diesem landläufigen Stand der Technik liegt der Erfindung das technische Problem zugrunde, eine Digitalkamera, insbesondere Standbild-Digitalkamera oder Einzeibild-Digitalkamera, so weiter zu entwickeln, dass der LCD-Bildschirm auch in heller und selbst greller Umgebung kontrastreich erkennbar bleibt und die Digitalkamera auch dann nach Art des Umgangs mit geläufigen Kleinbildkameras als sogenanntem dritten Auflagepunkt am Kopf des Fotografen abgestützt werden kann, wenn die Kamera vom Fotografen mit beiden Händen gleichzeitig gehalten wird, und zwar ohne durch eine solche Ausgestaltung die Vorteile der Miniaturisierung der Digitalkamera in Frage zu stellen.

Die Erfindung löst diese Aufgabe durch einen Lichtschacht zur Verwendung an einer Digitalkamera, der die im Patentanspruch 1 genannten Merkmale aufweist. Vorteilhafte Ausgestaltungen der Erfindung sind Gegenstand der Unteransprüche.

Das Wesen der Erfindung beruht also im Grundprinzip auf der Schaffung eines den LCD-Bildschirm umgebenden, leicht befestigbaren und wieder lösbaren, teleskopisch ausziehbaren und wieder einschiebbaren Lichtschachts. Dabei gewährleistet der durch einfaches Aufdrücken auf die Kamerarückwand, sei dies mittels eines Klettverschlusses oder einer Rastverbindung, einer bajonettartigen Verriegelung oder irgendeines anderen äquivalenten Mittels, zu befestigende Lichtschacht nicht nur ein leichtes Befestigen, sondern auch eine ebenso rasche und problemlose Lösbarkeit des aufgesetzten Lichtschachts von der Kamera. Die für andere Anwendungen im Vordergrund stehende kleine, bewegliche und leichte Bauweise einer Digitalkamera auch bei hoher Leistung bleibt in der Praxis bei Nutzung eines Lichtschachtes gemäß der Erfindung also trotzdem unberührt, da dieser, sofern aufgrund der Lichtverhältnisse nicht erforderlich, in einfacher Weise demontiert und in einer Bereit-schaftstasche verstaut werden kann.

Die Teleskopierbarkeit des Lichtschachtes ermöglicht jedoch auch einen relativ kompakten Aufbau der Kamera bei aufgesetztem, in einer zusammengeschobenen Transportstellung befindlichen Lichtschacht. Der Lichtschacht ermöglicht durch ein effektives Abschatten auch bei relativ steil einfallendem Licht die Benutzung des Lichtschachts bei ausgefahrenem Teleskop nach Art eines optischen Durchsichtsuchers, während bei eingeschobenem Teleskop bzw. durch Verschiebung der Optik eine vergrößerte Betrachtung der LCD-Anzeige mit beiden Augen möglich ist. Eine solche Betrachtungsweise ermöglicht auch bei noch relativ hellem Umgebungslicht aufgrund der reflexfreien und daher ungeschmälert kontrastreichen LCD-Bildwiedergabe eine sorgfältige Begutachtung der auf dem LCD-Bildschirm darge-stellten Bilder.

Dabei ist nach einer Ausgestaltung der Erfindung der jeweils eingestellte teleskopische Auszug des Lichtschachts fixierbar, beispielsweise durch Reibschluss, durch Form- oder Kraftschluss mittels angebrachter Arretiermittel oder mittels eines arretierbaren oder nicht arretierbaren Getriebes.

Da der in der Praxis benötigte Auszug zwischen kürzestem und längstem Lichtschacht nur selten mehr als 100 % beträgt, ist der Lichtschacht vorzugsweise mit nur zwei teleskopisch ineinander verschiebbaren Teilen ausgebildet.

Unabhängig davon, ob der Lichtschacht aus jeweils zwei oder mehreren teleskopierbaren Gliedern besteht, ist nach einer weiteren besonders wichtigen Ausgestaltung der Erfindung vorzugsweise im Innersten der teleskopierbaren Glieder des Lichtschachts in Durchsichtrichtung, also in Richtung vom Fotografen auf den LCD-Bildschirm zu, unterhalb der benutzerseitigen Aussenkante des innersten teleskopierbaren Gliedes eine Vergrößerungslinse derart gehaltert, dass diese den gesamten lichten Querschnitt des radial innersten teleskopierbaren Lichtschachtgliedes ausfüllt. Diese Vergrößerungslinse ist zudem in einer besonders vorteilhaften Ausführung als entspiegelte plan-konvexe Kondensor-Linse ausgebildet. Dabei kann durch eine solche Anordnung einer entspiegelten Vergrößerungslinse in einem Abstand von vorzugsweise von 5 mm bis 20 mm unterhalb der äusseren Kante des teleskopierbaren Lichtschachtgliedes ein Eindringen auch jeglichen Streulichts in den Lichtschacht ausgeschlossen werden, so dass unter praktisch allen Umgebungslichtverhältnissen ein reflektionsfreies Betrachten der Bildwiedergabe auf dem LCD-Bildschirm gewährleistet ist. Der Brechwert dieser Linse ist dabei so bemessen, dass bei vollständig eingefahrener Vergrößerungslinse eine optische Vergrößerung des LCD-Bildschirmbildes erhalten wird, die eine sorgfältige Beurteilung von beispielsweise Schärfe, Auflösung und Kontrast ermöglicht, ohne jedoch bei zu starker Vergrößerung durch eine Auflösung des Rasters des LCD wieder beeinträchtigt zu werden. Nach dieser Maßgabe haben sich bei einem optimalen Abstand der Linse von der LCD-Bildschirmoberfläche im Bereich von vorzugsweise 60 bis 95 mm, bei dem keinerlei Streulicht mehr auf die LCD-Oberfläche gelangt, Brechwerte der Linse im Bereich von 5,5 Dioptrien (dpt) bis zu 7,5 Dioptrien, insbesondere ein Brechwert von +6,5 Dioptrien, bewährt.

Zur Benutzung als Durchsichtsucher wird der Lichtschacht dann durch Ausziehen der Vergrößerungslinse so fokussiert und anschließend fixiert, dass der Fotograf nach Maßgabe seiner Sehschärfe beim Anliegen des oberen Randes des Sucherschachts am Kopf das Bild auf dem LCD-Bildschirm einäugig scharf sehen kann. Während also bei einäugiger Betrachtung die Betrachtungsschärfe durch Einfahren und Ausziehen des Lichtschachtteleskops bzw. der Vergrößerungslinse eingestellt wird, wird für eine beidäugige Begutachtung der Bildwiedergabe auf dem LCD-Bildschirm für eine optimale Nutzung der Vergrößerung der Lichtschacht bzw. die die Vergrößerungslinse umfassende Optik zur Kamera-Rückwand hin eingeschoben und die jeweilige Betrachtungsschärfe durch eine Veränderung des Abstandes des Auges des betrachtenden Fotografen von der im Lichtschacht liegenden Vergrößerungslinse hergestellt.

Ein wesentliches Merkmal der Praxistauglichkeit für einen Lichtschacht mit den Merkmalen der Erfindung ist seine schnelle und problemlose Aufsetzbarkeit und Wiederabnehmbarkeit bei gleichzeitig absolut zuverlässig festem und gegen unbeabsichtigtes Ablösen gesichertem Sitz des Lichtschachts an der Kamera. Dies ist nach einer Ausgestaltung der Erfindung vorzugsweise durch einen durch Aufdrücken des Lichtschachtes auf die Kamerarückwand durch Schnappen hergestellten Rastverschluss gewährleistet, der den Lichtschacht durch formschlüssigen Hinterschnitt auf der Kamerarückwand fixiert. Nach einer Ausgestaltung der Erfindung ist dies durch zwei Rastleisten realisiert, die durchgehende Bohrungen aufweisen und einander gegenüberliegend parallel zu zwei einander gegenüberliegenden Seiten des LCD-Bildschirms angeordnet und mit dem Kameragehäuse lösbar oder fest ver-bunden sind. Eine dieser beiden Rastleisten ist als starre Wiederlagerleiste ausge-bildet, während die gegenüberliegenden Leiste zumindestens teilweise als federnde Leiste ausgebildet ist. Der Lichtschacht ist mit komplementären starren Rastzapfen ausgebildet, die beim Einsetzen des Lichtschachtes in die komplementären Öffnungen in der Wiederlagerleiste eingesetzt und auf der gegenüberliegenden Seite beim abschwenkenden Niederdrücken des Lichtschachts unter kurzzeitiger Verformung durch Abbiegen der Federleiste ebenfalls in die dort vorgesehenen komplementären Öffnungen formschlüssig eingreifen. In diesem Zustand sind Lichtschacht und Digitalkamera unverlierbar und starr durch Formschluss zuverlässig miteinander verbunden. Zum Ablösen des Lichtschachts bedarf es dagegen lediglich eines Abdrückens der Federleiste und eines gleichzeitigen Herausschwenkens des Lichtschachts aus der Wiederlagerverrasterung. Das federnde Freigeben der Lichtschachtrasterung kann durch entsprechende an der Federleiste angeformte Bedienungselement erleichtert werden, so beispielsweise durch das Anformen von Zungen oder durch ein einfaches Abkanten der Oberkante der Federleiste. Eine solche Abkantung kann dabei gleichzeitig als Einführungfase für die Rastelemente dienen.

Die Erfindung sieht vor, dass die Vergrößerungslinse unabhängig von dem sie aufnehmenden Teil des Lichtschachts an einem in diesem ver-schiebbar gelagerten Linsenhalter angeordnet ist, so dass die Vergrößerungslinse mit dem Linsenhalter in die Gesamtbildbetrachtungsposition eingeschoben werden kann, während das am weitesten vom Kameragehäuse entfernte Lichtschacht-Teil in der Funktion eines Reflexionsschutztubus in ausgezogener Position stehenbleibt. Ein separater Reflexionsschutztubus erübrigt sich dabei völlig.

Weitere Ausgestaltungen der Merkmale der Erfindung sind ebenfalls Merkmale der Unteransprüche.

Die Erfindung ist im folgenden anhand eines Ausführungsbeispiels in Verbindung mit den Zeichnungen näher erläutert.

Es zeigen:
- Fig. 1: die Rückwand einer Digitalkamera mit LCD-Bildschirm und den Befestigungselementen zum lösbaren Befestigen eines Lichtschachtes,
- Fig. 2: einen Längsschnitt durch ein erstes nicht zur Erfindung gehörendes Ausführungsbeispiel eines teleskopisch ausfahrbaren Lichtschachts,
- Fig. 3: einen Längsschnitt durch ein zweites Ausführungsbeispiel eines teleskopisch ausfahrbaren Lichtschachts in eingeschobener Transport-Stellung,
- Fig. 4: einen Längsschnitt durch das zweite Ausführungsbeispiel eines teleskopisch ausfahrbaren Lichtschachts in ausgefahrener Sucherstellung,
- Fig. 5: einen Längsschnitt durch das zweite Ausführungsbeispiel eines teleskopisch ausfahrbaren Lichtschachts mit eingeschobener Vergößerungslinse in einer Bildbetrachtungs-Position, und
- Fig. 6: eine gegenüber der Fig. 4 um 90° gedrehte Seitenansicht.

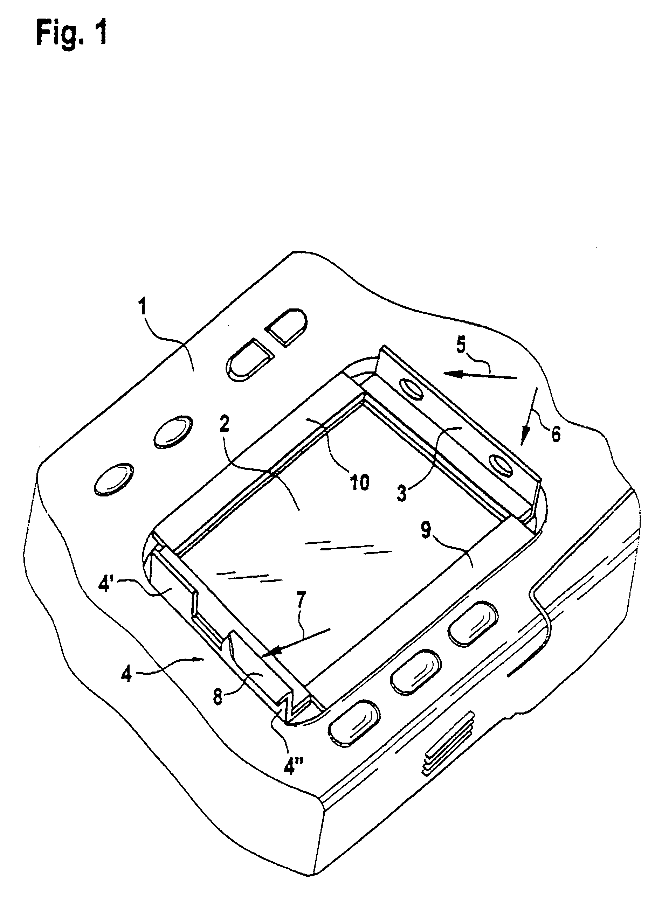

In der Figur 1 ist in perspektivischer Darstellung die Rückwand eines Kameragehäuses 1 einer Digitalkamera mit einem LCD-Bildschirm 2 gezeigt. Unmittelbar angrenzend an die Anzeigefläche des LCD- Bildschirms 2 sind entlang der einander gegenüberliegenden kürzeren Seiten des LCD- Bildschirms Rastleisten 3 bzw. 4 mit Bohrungen 5, 6 bzw. 7 angeordnet, die zur Aufnahme von Rastzapfen 22 dienen, die entsprechend an einem insgesamt mit 11 bezeichneten Lichtschacht vorgesehen sind.

Der Lichtschacht 11 dient als LCD-Betrachter und ist ein wertvolles Zubehör bei Arbeiten mit der Digitalkamera bei starkem Lichteinfall.

Die Rastleiste 3 ist insgesamt starr ausgelegt und dient als Widerlagerleiste. Die gegenüberliegende Rastleiste 4 ist zweigeteilt ausgebildet, wobei einer der beiden Leistenabschnitte ebenfalls starr als Führungsleiste 4', der andere federnd als Federleiste 4" ausgebildet ist. Die Federleiste 4" weist eine Abkantung 8 auf, die sowohl als Einführfase für den zugeordneten Rastzapfen 22 als auch als Griff- Fläche zum lösenden Abbiegen der Federleiste 4" zum Abnehmen des Lichtschachtes 11 dient.

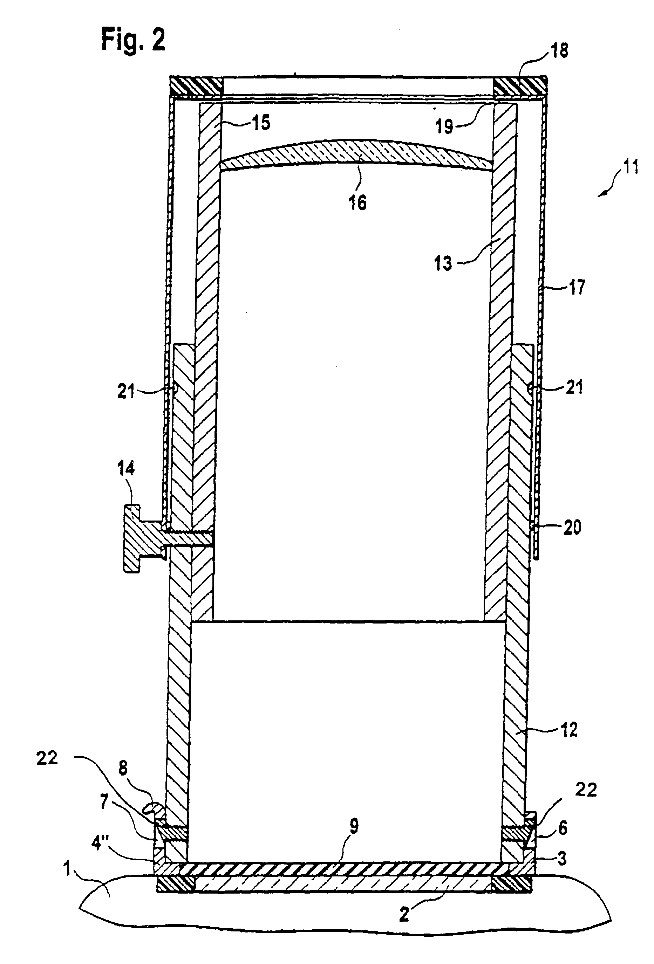

Die Vorrichtung zur rastenden Aufnahme des Lichtschachts 11 kann dabei in der in Fig. 2 dargestellten Weise nur in Form zweier einander gegenüberliegender Rastleisten 3 bzw. 4 ausgebildet sein, sie kann jedoch in gleicher Weise auch als geschlossen umlaufender Rahmen konfiguriert werden. Bei einer Ausbildung in der hier dargestellten Weise in Form zweier einander gegenüberliegender Rastleisten können optische Dichtleisten 9 bzw. 10 aus Filz oder anderem optisch trennendem Werkstoff an den nicht von Rastleisten umgebenen Seiten des LCD-Bildschirms 2 eingefügt sein, wobei dünnere Lagen derartiger Dichtleisten bei Bedarf auch im Bereich der Rastleisten vorgesehen sein können, um den Einfall von seitlichem Licht auf den LCD-Bildschirm 2 vollständig auszuschließen.

Zum Verbinden des in der Fig. 2 in ausgezogenem Zustand dargestellten Lichtschachts 11 mit dem Kameragehäuse 1 der Digitalkamera werden zwei Rastzapfen 22 in die Bohrungen 5, 6 der Wiederlagerleiste 3 bei leicht verkantetem Lichtschacht 11 eingesetzt. Die Bohrung 5 ist aufgrund der Darstellung in Fig. 2 nicht erkennbar. Der Lichtschacht 11 wird dann in Richtung auf die gegenüberliegenden Rastleiste 4 geschwenkt und niedergedrückt, wobei der in Figur 2 links liegende Rastzapfen 22 nach Abbiegen der Federleiste 4" in die Bohrung 7 der Federleiste 4" einrastet. Der auf diese Weise durch leichtes Aufdrücken auf der Kamerarückwand fixierte Licht-schacht 11 ist durch den starren Führungsleistenabschnitt 4' und die ebenfalls starr ausgebildete Widerlagerleiste 3 gegen jede Verdrehung oder Verkantung in der Ebene des LCD-Bildschirms 2 gesichert, während er gleichzeitig durch den Eingriff von drei Rastzapfen 22 in die drei Bohrungen 5, 6 und 7 der Rastleisten 3 und 4 an der Kamera durch formschlüssigen Hinterschnitt gegen jegliche axiale Beweglichkeit gesichert ist.

Wie aus Fig. 2 ersichtlich besteht der Lichtschacht 11 aus zwei teleskopisch gegeneinander verschiebbaren Gliedern, nämlich einem äußeren Tubus 12 und einem inneren teleskopierbaren Tubus 13 von jeweils rechteckigem Querschnitt. Der Querschnitt des äußeren Tubus 12 ist dabei so gewählt, dass er sich nach Form und Größe exakt um den LCD-Bildschirm 2 herumlegt und diesen vollständig umschließt. Der innere teleskopierbare Tubus 13 weist eine ähnliche Form auf. Er ist jedoch um die Wandstärke des äußeren Tubus 12 kleiner und mit geringem Spiel in diesem geführt verschiebbar.

Der zwischen dem äußeren Tubus 12 und dem inneren Tubus 13 eingestellte teleskopische Auszug ist durch eine Klemmschraube 14 kraftschlüssig fixierbar. Statt der in Fig. 2 gezeigten Prinzipdarstellung unter Verwendung einer Klemmschraube kann selbstverständlich das Teleskop auch reibschlüssig, durch einen Verzahnungsantrieb oder auf andere Art bewegbar und in lösbarer Weise fixierbar ausgelegt sein. Von Bedeutung ist in diesem Zusammenhang lediglich ein gegen ein Ein-schieben des inneren Tubus 13 in den äußeren Tubus 12 effektives Mittel zum Fixieren der Auszugsstellung in der Weise, dass bei einem Andrücken der der Kamera abgewandten Oberkante 15 des Lichtschachtes 11 an den Kopf des Fotografen zum Zwecke einer Stabilisierung der Kamera bei der Aufnahme kein Einschieben des inneren Tubus 13 erfolgt.

In dem inneren Tubus 13 des Lichtschachtes 11 ist in Durchsichtrichtung unterhalb der benutzerseitigen Aussenkante oder Oberkante 15 eine Vergrößerungslinse 16 gehaltert. Die Halterung der Linse liegt rund 12 mm axial unterhalb der Oberkante 15 des Lichtschachts 11. Die Vergrößerungslinse 16 hat eine rechteckige Aussenkontur, die den gesamten freien inneren Querschnitt des inneren Tubus 13 überdeckt. Dabei ist durch eine zusätzliche sorgfältige Entspiegelung der Vergrößerungslinse 16 zusätzlich zur Anordnung der Vergrößerungslinse 16 axial unterhalb der Oberkante des Lichtschachtes 11 gewährleistet, dass absolut kein Streulicht, und zwar auch unter ungünstigsten Umgebungslichtverhältnissen, auf die Anzeigefläche des LCD-Bildschirms gelangt. Dadurch ist ein unbeeinträchtigt reflektionsfreies scharfes und konturreiches Betrachten der dargestellten Bildwiedergabe gewährleistet, und zwar sowohl bei einäugigem sucherartigem Betrieb mit einem entsprechend Fig. 2 teleskopisch ausgezogenen Lichtschacht 11, als auch bei einer eingeschobenen Betriebsposition des inneren Tubus 13 des Lichtschachts, bei dem in einem größeren Abstand der Augen des Fotografen von der Oberkante 15 des Lichtschachts eine Begutachtung des dargestellten Bildes mit beiden Augen gleichzeitig erfolgen kann.

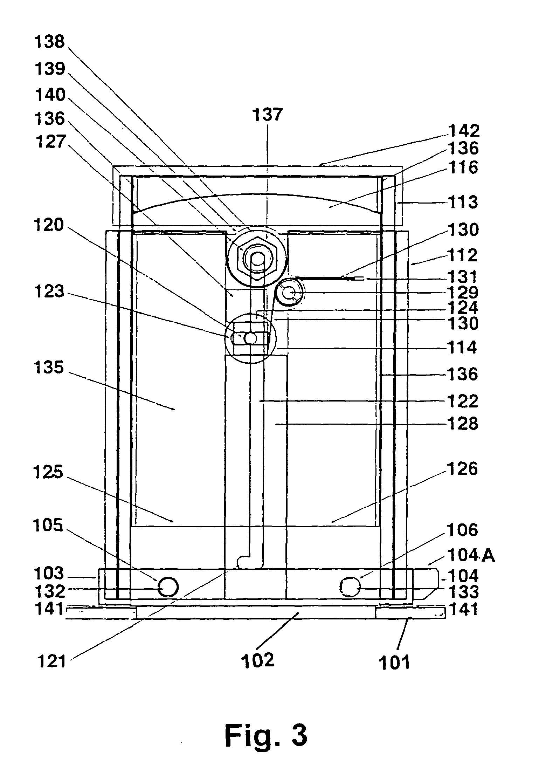

Ausdrücklich sei darauf hingewiesen, dass in den Figuren 1 und 2 zur Erläuterung der Erfindung lediglich ein handwerklich gefertigtes Demonstrationsmuster wiedergegeben ist. Es ist dabei selbstverständlich, dass ein für die Serienfertigung entwickelter Lichtschacht, beispielsweise entsprechend den Figuren 3 bis 5 mit anderen konstruktiven Elementen, aber gleicher oder analoger Funktionalität den Rahmen der Erfindung nicht verlässt. So wird beispielsweise insbesondere die Umgestaltung des hier beschriebenen einstufig teleskopierbaren Lichtschachts 11 als zweistufig ausziehbarer Lichtschacht als unmittelbar von der Erfindung miterfasste naheliegende Abänderung des beschriebenen Ausführungsbeispiels der Erfindung angesehen.

Auf dem äußeren Tubus 12 ist beim ersten Ausführungsbeispiel gemäß Fig. 2 ein Reflexionsschutztubus 17 teleskopisch verschiebbar angeordnet. Dieser weist an seinem dem Kameragehäuse 1 entfernten Ende einen nach innen vorspringenden Bund als Anschlagfläche 18 auf, die mit einer stirnseitigen Oberkante 15 des inneren Tubus 13 zusammenwirkt. Der Reflexionsschutztubus 17 weist nahe seines dem Kameragehäuse 1 zugewandten Endes an seiner Innenseite vorspringende Rastnoppen 20 auf, die mit einer am Außenmantel des äußeren Tubus 12 vorgesehenen Rastvertiefung 21 zusammenwirken, die nahe am äußeren Ende des äußeren Tubus 12 vorgesehen ist.

Während der innere Tubus 13 mittels der Klemmschraube 14 lösbar gegenüber dem äußeren Tubus 12 arretierbar und in der gelösten Position verschiebbar ist, wird der Reflexionsschutztubus 17 bei einer Bewegung des inneren Tubus 13 weg vom Kameragehäuse 1 durch die an der Anschlagfläche 18 anstoßende Oberkante 15 mitgenommen, bis der Rastnoppen 20 in Eingriff mit der Rastvertiefung 21 gerät. Diese Position, bei der die Linse 16 einen Abstand von etwa 95 mm vom LCD-Bildschirm 2 aufweist, bildet die Sucherfunktion, in der der Benutzer mit einem Auge in Anlage an der äußeren Fläche des die Anschlagfläche 18 aufweisenden Bundes das Motiv sowie die Belichtungs- und Farbwerte einstellt.

Nach dem Betätigen des Auslösers wird die Klemmschraube 14 gelöst und gleichzeitig durch Verschieben der in einem Schlitz am äußeren Tubus 12 geführten Klemmschraube 14 der innere Tubus 13 in den äußeren Tubus 12 eingeschoben, wobei sich die Vergrößerungslinse 16 in eine Gesamtbildbetrachtungsfunktion bewegt, in der sie einen Abstand von etwa 60 mm vom LCD-Bildschirm 2 aufweist. Dabei bleibt der Reflexionsschutztubus 17 durch die Rastnoppen 20 im Eingriff mit den Rastvertiefungen 21, wodurch er eine Abschattung für die Vergrößerungslinse 16 und den LCD-Bildschirm 2 bildet. Aufgrund der Vergrößerungsfunktion der Vergrößerungsinse 16 kann der Benutzer in dieser Position frei von Lichtreflexen und negativen Streulichteinflüssen das entstandene Bild insgesamt begutachten. Für das voll-ständige Zusammenschieben in die Transportposition wird der Reflexionsschutztubus 17 zusätzlich durch leichten Druck in Richtung auf das Kameragehäuse 1 zubewegt, wobei die Rastnoppen 20 von den Rastvertiefungen 21 außer Eingriff geraten und der gesamte Lichtschacht 11 in eine kompakte Transportstellung gerät.

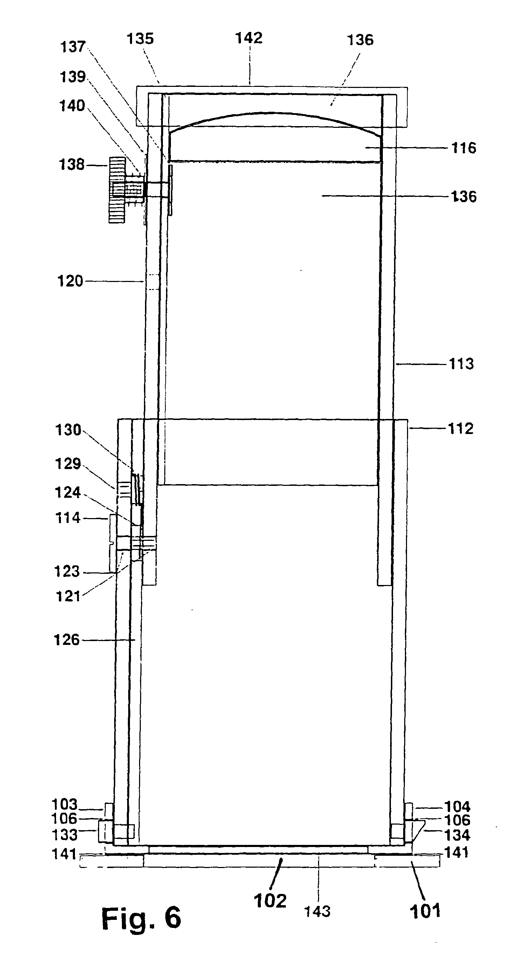

Das in den Figuren 3 bis 6 dargestellte zweite Ausführungsbeispiel unterscheidet sich vom gerade beschriebenen ersten Ausführungsbeispiel dadurch, dass kein außen liegender Reflexionsschutztubus vorhanden ist, sondern die Vergrößerungslinse 116 dort an einem Linsenhalter 135 befestigt oder gehalten ist, der seinerseits im inneren Tubus 112 verschiebbar gelagert ist. Somit bildet bei diesem Ausführungs-beispiel bei in Richtung auf das Kameragehäuse 101 zu bewegter Vergrößerungslinse 116 der in ausgezogener Stellung stehenbleibende innere Tubus 113 von der Funktion her einen Reflexionsschutztubus. Im zweiten Ausführungsbeispiel sind alle Teile, die eine gleiche oder ähnliche Funktion wie im ersten Ausführungsbeispiel aufweisen mit einer um 100 erhöhten Bezugszahl versehen.

Am Kameragehäuse 101 ist in dessen Rückwand ein LCD-Bildschirm 102 vorgesehen. Zu beiden Längsseiten des rechteckigen LCD-Bildschirms 102 ist zum einen eine starre Rastleiste 103 und zum anderen eine Rastleiste 104 befestigt, wobei die letztere einen federnd bewegbaren Anteil in Form einer Zunge 104A aufweist. In der Rastleiste 103 sind zwei voneinander beabstandete Bohrungen 105 und 106 vorgesehen. Die federnd bewegbare Zunge 104A der Rastleiste 104 weist eine Bohrung 107 auf. Die Bohrungen 105 und 106 dienen zur Aufnahme von Haltestiften 132 bzw. 133, die an dem dem Kameragehäuse 101 zugewandten Ende eines äußeren Tubus 112 eines insgesamt mit 111 bezeichneten Lichtschachts angeordnet sind. Gegenüberliegend zu den Haltestiften 132 bzw. 133 ist ein Raststift 134 am äußeren Tubus 112 vorgesehen. Dieser greift in die Bohrung 107 an der Zunge 104A an.

Der Lichtschacht 111 wird folglich an den Rastleisten 103 bzw. 104 derart befestigt, dass zunächst die Haltestifte 132 bzw.133 in die Bohrungen 105 bzw. 106 in Form einer Kippbewegung eingeführt werden, worauf die Zunge 104A durch Finger- oder Daumendruck von der Rastleiste 103 wegbewegt wird und somit der Raststift 134 aufgrund des vergrößerten Abstandes zwischen den Rastleisten in die Bohrung 107 eingreift. Nachdem die Zunge 104A aufgrund ihrer Federwirkung in ihre Ausgangslage zurückgekehrt ist, ist der äußere Tubus 112 sicher mit dem Kameragehäuse 101 verriegelt.

Zur Herstellung der optischen Dichtigkeit zwischen Kameragehäuse und dem unteren Rand des äußeren Tubus 112 können zusätzliche Dichtleisten 143 an der Stirnseite des Tubus 112 oder an bzw. zwischen den Rastleisten 103 bzw. 104 vorgesehen sein. Diese sind dann ähnlich wie die Dichtleisten 9 bzw. 10 in der Fig. 1 aus-geführt. Im äußeren Tubus 112 ist ein innerer Tubus 113 verschiebbar gelagert, so dass sich letzterer mit einer gleitenden Spielpassung an die Innenwandung des äußeren Tubus 112 anlegt und von diesem geführt wird.

Die Wand des äußeren Tubus 112 wird von einer Arretierschraube 114 durchsetzt. Die Arretierschraube 114 ist auf ihrer Innenseite mit einer Vierkantmutter 124 verbunden. Die Vierkantmutter 124 ist durch an die Innenseite der Wandung des äußeren Tubus 112 angeklebte Abstandsflächen 125 bzw. 126 seitlich geführt. Zur Wandung des Kameragehäuses 1 hin ist sie durch eine ebenfalls auf die Innenwand des Tubus 112 aufgeklebte Anschlagfläche 128 begrenzt. Zum anderen Ende hin ist eine obere Anschlagfläche 127 mit der Innenwand des äußeren Tubus 112 verbunden, so dass sich die Vierkantmutter nur quer zur Verschieberichtung des inneren Tubus 113 bewegen kann.

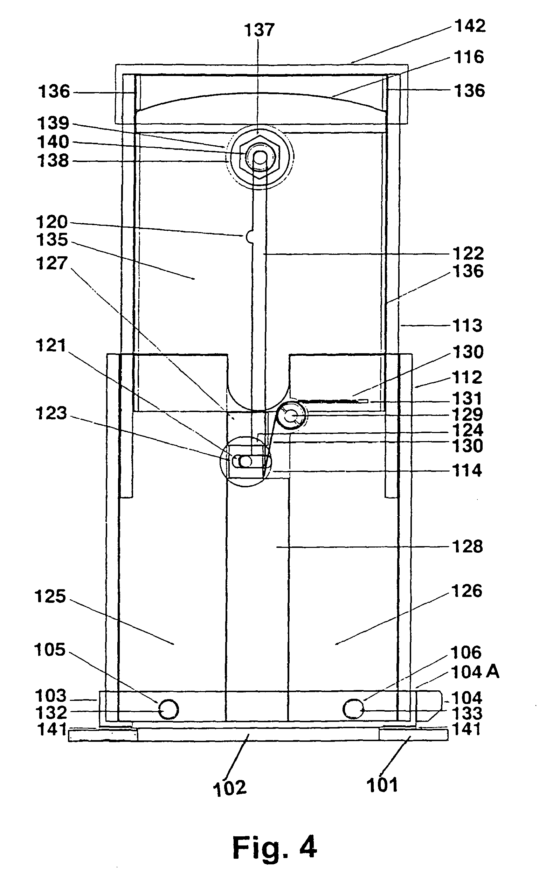

Die Arretierschraube 114 bzw. die Vierkantmutter 124 ist ferner mittels einer als Schenkelfeder ausgebildeten Feder 130 in ihre in Fig. 4 gezeigte nach links geschobene Position vorbelastet. Die Feder 130 ist an einer Federhalterung 129 auf der Innenseite des äußeren Tubus 112 gelagert und ihr anderes Ende wird durch einen Aufnahmeschlitz 131 festgehalten, der ebenfalls an der Innenseite des äußeren Tubus 112 eingearbeitet ist.

Ein glatter Schaftteil der Arretierschraube 114 steht in gleitendem Eingriff mit einem parallel zur axialen Verschieberichtung des inneren Tubus 113 in dessen Wand ausgebildetem Führungsschlitz 122. Dieser Führungsschlitz 122 weist nahe seines dem Kameragehäuses 101 zugewandten Endes eine Rastvertiefung 121 auf, die sich quer zum längsverlaufenden Führungsschlitz 122 nach links erstreckt (siehe Fig. 3). Weiter entfernt vom Kameragehäuse 101 weist der Führungsschlitz 122 eine Rastvertiefung 120 auf, die sich ebenfalls in Form eines Halbrunds quer zum Füh-rungsschlitz 122 nach links erstreckt (siehe Fig. 4).

Der in der Figuren 3 und 4 nach unten weisende Schenkel der Feder 130 drückt die Arretierschraube 114 in Richtung auf die Rastvertiefung 120 bzw. 121, so dass bei einem Eingriff in diese Rastvertiefungen keine axiale Verschiebung des inneren Tubus 113 möglich ist. Die axiale Verschiebung des inneren Tubus 113 wird dadurch ermöglicht, dass die Arretierschraube 114 durch leichten Fingerdruck nach rechts gegen die Feder 130 in die Haupterstreckungsrichtung des Führungsschlitzes 122 hineinbewegt wird. In Höhe einer der Rastvertiefungen 120 bzw. 121 erfolgt dann aufgrund des Federdrucks wieder ein selbsttätiges Einrasten. Die Querbewegung wird am äußeren Tubus 112 durch einen quer zum Führungsschlitz 122 verlaufenden Arretierschlitz 123 ermöglicht. Dieser befindet sich beim Einrasten in die Rastvertiefungen 120 bzw. 121 jeweils in Deckungslage mit diesen.

Beim zweiten Ausführungsbeispiel hat der Führungsschlitz 122 eine weitere Funktion. Er dient auch zur Führung einer Linsenhalter-Führungsschraube 137. Diese durchdringt die Wand des inneren Tubus 113 und einen dünnwandigen, verschiebbar im inneren Tubus 113 gelagerten Linsenhalter 135. Der Linsenhalter 135 ist im Querschnitt als eckiges U-Profil ausgebildet, wobei er bevorzugt durch Kaltknicken einer Makrolon-Folie hergestellt wird. Die beiden abgeknickten Seitenteile 136 dienen als Führungsflächen im rechteckigen Profil des inneren Tubus 113. Nahe seinem oberen Ende weist der Linsenhalter 135 im Bereich der Seitenteile 136 Aussparungen auf, die zur Aufnahme einer Vergrößerungslinse 116 dienen. Da sich das Material der Seitenteile 136 oberhalb der eingelegten Vergrößerungslinse 116 fortsetzt, ist diese im montierten Zustand durch den Linsenhalter 135 in axialer Richtung und durch die Innenwand des inneren Tubus 113 in radialer Richtung sicher geführt.

Die Linsenhalter-Führungsschraube 137 ist auf ihrer Außenseite mit einer Rändelmutter 138 als Griffteil verbunden. Im Bereich ihres axialen Führungsabschnitts im Führungsschlitz 122 ist sie glattwandig nach Art einer Schaftschraube ausgebildet. Auf der Oberfläche des inneren Tubus 113 ist um die Linsenhalter-Führungsschraube 137 herum zusätzlich eine Gleitscheibe 139 angeordnet. Eine Druckfeder 140 zwischen der Rändelmutter 138 und der Gleitscheibe 139 sorgt dafür, dass der Linsenhalter 135 und der innere Tubus 113 federnd aneinander ange-drückt werden und dadurch durch Reibschluß gegen ein unbeabsichtigtes Verschie-ben gesichert sind. Dieser Druck der Druckfeder 140 kann durch leichten Fingerdruck auf den Kopf der Rändelmutter 138 aufgehoben werden, so dass dann der Linsenhalter 135 mitsamt der Vergrößerungslinse 116 längs des Führungsschlitzes 122 im inneren Tubus 113 verschiebbar ist.

Am äußeren Ende des inneren Tubus 113 ist eine Gummiauflage 141 vorgesehen, an die sich die Augenpartie des Benutzers bei Verwendung des Lichtschachts 111 in der in Fig. 4 gezeigten Position als Sucher anlegt.

Der erfindungsgemäße Lichtschacht 111 weist somit drei verschiedene Positionen auf, die drei verschiedenen Funktionen entsprechen. So ist in Fig. 3 der innere Tubus 113 in den äußeren Tubus 112 eingeschoben, wobei die Arretierschraube 114 in die Rastvertiefung 120 eingreift. Diese Stellung ist die kompakte Transportstellung. Um die Kamera für eine Aufnahme vorzubereiten, wird die Arretierschraube 114 gegen den Druck der Feder 130 etwas nach rechts gedrückt, wobei die Arretierschraube 114 gleichzeitig als Griff für eine Verschiebebewegung des inneren Tubus 113 aus der in Fig. 3 gezeigten Position in die in Fig. 4 gezeigte Position dient. In Fig. 4 ist der innere Tubus 113 vollständig ausgefahren, wobei die Arretierschraube 114 mit der Rastvertiefung 121 im Eingriff ist. Der Benutzer legt nun die Augenpartie eines Auges an die Gummiauflage 141 an und verwendet mit Blick durch die Vergrö-ßerungslinse 116 den Lichtschacht 111 in Verbindung mit dem LCD-Bildschirm 102 als Sucher für die bevorstehende Aufnahme. Aufgrund der Abschir-mung durch den Lichtschacht 111 bietet der LCD-Bildschirm ein kontrastreiches Bild, das eine einwandfreie Einstellung der Kamera bzw. der Optik bezüglich des Motivs sowie eine Einstellung der Licht- und Farbwerte ermöglicht.

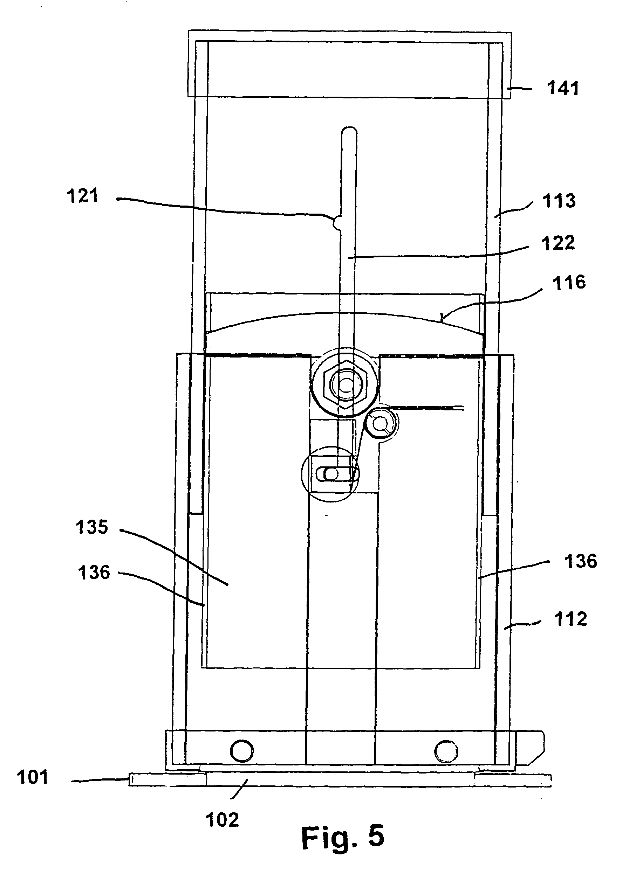

Nach dem Betätigen des Auslösers drückt der Benutzer leicht mit einem Finger auf den Kopf der Rändelmutter 138 und schiebt diese und damit den mit der Linsenhalter-Führungsschraube 137 verbundenen Linsenhalter 135 im unverändert ausgezogenen inneren Tubus 113 in Richtung auf die Wand des Kameragehäuses 101 zu. Dabei verkürzt sich der Abstand der Vergrößerungslinse 116 zum LCD-Bildschirm 102 von zuvor etwa 95 mm bei der Position gemäß Fig. 4 auf nunmehr etwa 60 mm bei der Position gemäß Fig. 5. Die Position gemäß Fig. 5 dient nun zum ganzflächigen Betrachten des gerade entstandenen, und auf dem LCD-Bildschirm 102 dargestellten Bildes, wobei die Vergrößerungslinse 116 gleichzeitig eine Vergrößerung dieses Bildes bewirkt. Da die Wand des inneren Tubus 113 einen relativ großen Überstand über die Fläche der Vergrößerungslinse 116 nach außen hat, kann kein seitliches Streulicht die kontrastreiche Abbildung auf dem LCD-Bildschirm 102 beeinträchtigen.

Sollen weitere Bilder geschossen werden, so wird nach leichtem Druck auf die Rändelmutter 138 die Linsenhalter-Führungsschraube 137 mit dem Linsenhalter 135 wieder in die Position gemäß Fig. 4 gefahren. Dieses Verschieben zwischen den Positionen gemäß Fig. 4 und Fig. 5 wiederholt sich, bis alle gewünschten Aufnahmen erledigt sind, wobei dann das Zusammenschieben in die kompakte Transportstellung gemäß Fig. 3 erfolgt.

Der Linsenhalter 135 ist aus einem dunklen, matten Kunststoff, vorzugsweise aus Makrolon, hergestellt und dient zur Abdeckung des Führungsschlitzes 122 bei ausgezogenem Innentubus 113 und bei hochgeschobener Vergrößerungslinse 116 gemäß Fig. 4.

Die Befestigung der Rastleisten 103 bzw. 104 erfolgt bei einer nachträglichen Nachrüstlösung vorzugsweise mittels eines doppelseitigen Klebebandes, das auf der der Rückwand des Kameragehäuses 101 zugewandten Seite mit einem lösbaren Spezialkleber beschichtet ist. Bei einer Serienlösung können die Rastleisten 103 bzw. 104 vom Hersteller direkt mit an die Wand des Kameragehäuses angeformt sein. Eine lösbare Befestigung des Lichtschachtes 11 bzw. 111 ist in jedem Falle nützlich, da dieser unter normalen Bedingungen, d.h. bei normalem Lichteinfall oder Fotografieren in geschlossenen Räumen nicht erforderlich ist und dann abgenommen werden kann.

### Bezugszeichenliste

- 1: Kameragehäuse
- 2: LCD-Bildschirm
- 3: Rastleiste
- 4,4',4": Rastleiste
- 5: Bohrung
- 6: Bohrung
- 7: Bohrung
- 8: Abkantung
- 9: Dichtleiste
- 10: Dichtleiste
- 11: Lichtschacht (LCD-Betrachter)
- 12: äußerer Tubus
- 13: innerer Tubus
- 14: Klemmschraube
- 15: Oberkante (von 13)
- 16: Vergrößerungslinse
- 17: Reflexionsschutztubus
- 18: Anschlagfläche
- 20: Rastnoppen
- 21: Rastvertiefung
- 22: Rastzapfen
- 101: Digitalkameragehäuse
- 102: LCD-Bildschirm
- 103: Rastleiste
- 104: Rastleiste
- 104A: Zunge (an 104)
- 105: Bohrung
- 106: Bohrung
- 107: Bohrung
- 109: Dichtleiste
- 110: Dichtleiste
- 111: Lichtschacht (LCD-Betrachter)
- 112: äußerer Tubus
- 113: innerer Tubus
- 114: Arretierschraube
- 115: Oberkante (von 113)
- 116: Vergrößerungslinse
- 120: Rastvertiefung
- 121: Rastvertiefung
- 122: Führungsschlitz
- 123: Arretierschlitz
- 124: Vierkantmutter
- 125: Abstandsfläche
- 126: Abstandsfläche
- 127: (obere) Anschlagfläche (für 124)
- 128: (untere) Anschlagfläche (für 124)
- 129: Federhalterung
- 130: Feder
- 131: Aufnahmeschlitz (für 130)
- 132: Haltestift
- 133: Haltestift
- 134: Raststift
- 135: Linsenhalter
- 136: Seitenteil (von 135)
- 137: Linsenhalter-Führungsschraube
- 138: Rändelmutter
- 139: Gleitscheibe
- 140: Druckfeder
- 141: Gummiauflage
- 143: Dichtleiste

## Patentansprüche

1. Lichtschacht (111) zur Verwendung an einer Digitalkamera mit einem LCD-Bildschirm (2, 102) in einer Wand eines Kameragehäuses (101), **gekennzeichnet durch** wenigstens zwei teleskopisch gegeneinander verschiebbare Teile (112; 113), von denen ein erstes Teil (112) am Kameragehäuse (1, 101) den LCD-Bildschirm (2, 102) umschließend befestigbar ist und ein zweites Teil (113) in eine vom Kameragehäuse (101) entferntere Stellung verschiebbar ist, wobei in dem zweiten Teil (113) des Lichtschachtes (111) ein Linsenhalter (135) verschiebbar angeordnet ist, in dem eine Vergrößerungslinse (116) angeordnet ist.

2. Lichtschacht nach Anspruch 1, **gekennzeichnet durch** Mittel (114) zum Fixieren einer bedarfsweise eingestellten teleskopischen Auszugslänge des Lichtschachtes (111) zwischen seinen Teilen (112; 113).

3. Lichtschacht nach Anspruch 1 oder 2, **gekennzeichnet durch** Rastmittel (103, 104, 132, 133, 134) zum lösbaren Befestigen am Kameragehäuse (101).

4. Lichtschacht nach Anspruch 3, **dadurch gekennzeichnet,**
**dass** die Rastmittel zwei zu den Seiten des LCD-Bildschirms (2) einander gegenüberliegend am Kameragehäuse (101) befestigte Rastleisten (103, 104) mit Ausnehmungen oder durchgehenden Bohrungen (105, 106, 107) zur Aufnahme komplementärer Halte- bzw. Rastmittel (132, 133, 134) des Lichtschachtes (111) umfassen.

5. Lichtschacht nach Anspruch 4, **dadurch gekennzeichnet, dass** zumindestens eine der beiden einander gegenüberliegenden Rastleisten (104) zumindest in einem Teilbereich (104A) federnd ausgebildet ist.

6. Lichtschacht nach Anspruch 5, **dadurch gekennzeichnet, dass** der federnd ausgebildete Teilbereich (104A) der Rastleiste (104A) einen ergonomisch geformten Griffbereich (8) für das Aufheben der Arretierung aufweist.

7. Lichtschacht nach einem der Ansprüche 1 bis 6, **dadurch gekennzeichnet, dass** die Vergrösserungslinse (16) von der Bildfläche des LCD-Bildschirms (2) in einer Sucherposition einen Abstand von etwa 95 mm aufweist.

8. Lichtschacht nach einem der vorhergehenden Ansprüche, **dadurch gekennzeichnet, dass** in dem zweiten Teil des Lichtschachts (113) ein achsparallel verlaufender Führungsschlitz (122) vorgesehen ist, der zur Betätigung und Führung des zweiten Teils (113) gegenüber dem ersten Teil (112) dient.

9. Lichtschacht nach Anspruch 8, **dadurch gekennzeichnet, dass** der Führungsschlitz (122) auch zur Betätigung und Führung des Linsenhalters (135) bei dessen Verschiebung im zweiten Teil (113) des Lichtschachtes (111) dient.

10. Lichtschacht nach einem der vorhergehenden Ansprüche, **dadurch gekennzeichnet, dass** er als zweistufig ausziehbarer Lichtschacht ausgebildet ist.

11. Lichtschacht nach einem der vorhergehenden Ansprüche, **dadurch gekennzeichnet, dass** die teleskopisch gegeneinander verschiebbare Teile (112; 113) einen rechteckigen Querschnitt aufweisen.

## Claims

1. Focusing hood (111) for use on a digital camera having an LCD screen (2, 102) in one wall of a camera housing (101), **characterized by** at least two parts (112; 113) which can be displaced telescopically with respect to one another, of which a first part (112) is fixed to the camera housing (1, 101) enclosing the LCD screen (2, 102), and a second part (113) can be displaced into a position more remote from the camera housing (101), a lens holder (135) in which a magnifying lens (116) is arranged being arranged such that it can be displaced in the second part (113) of the focusing hood (111).

2. Focusing hood according to Claim 1, **characterized by** means (114) for fixing a telescopic pull-out length of the focusing hood (111), which can be adjusted as necessary, between the parts (112; 113) of the said hood.

3. Focusing hood according to Claim 1 or 2, **characterized by** latching means (103, 104, 132, 133, 134) for the detachable fixing to the camera housing (101).

4. Focusing hood according to Claim 3, **characterized in that** the latching means comprise two latching strips (103, 104) fixed to the sides of the LCD screen (2) opposite each other on the camera housing (101) and having cut-outs or continuous drilled holes (105, 106, 107) to accommodate complementary retaining or latching means (132, 133, 134) of the focusing hood (111).

5. Focusing hood according to Claim 4, **characterized in that** at least one of the two mutually opposite latching strips (104) is designed to be springy, at least in a subregion (104A).

6. Focusing hood according to Claim 5, **characterized in that** the springy subregion (104A) of the latching strip (104A) has an ergonomically shaped grip region (8) to cancel the locking.

7. Focusing hood according to one of Claims 1 to 6, **characterized in that** the magnifying lens (16) is at a distance of about 95 mm from the image surface of the LCD screen (2) when in a finder position.

8. Focusing hood according to one of the preceding claims, **characterized in that** in the second part of the focusing hood (113) there is provided a guide slot (122) which runs parallel to the axis and which is used to actuate and guide the second part (113) with respect to the first part (112).

9. Focusing hood according to Claim 8, **characterized in that** the guide slot (122) is also used to actuate and guide the lens holder (135) as the latter is displaced in the second part (113) of the focusing hood (111).

10. Focusing hood according to one of the preceding claims, **characterized in that** it is constructed as a focusing hood that can be pulled out in two stages.

11. Focusing hood according to one of the preceding claims, **characterized in that** the parts (112; 113) that can be displaced telescopically with respect to one other have a rectangular cross section.

## Revendications

1. Parasoleil (111) destiné à être utilisé sur un appareil photo numérique équipé d'un écran LCD (2, 102) dans une paroi d'un boîtier d'appareil photo (101), **caractérisé par** au moins deux parties (112 ; 113) pouvant coulisser télescopiquement l'une par rapport à l'autre, dont une première partie (112) peut être fixée au boîtier d'appareil photo (1, 101) en entourant l'écran LCD (2, 102) et une deuxième partie (113) peut coulisser dans une position éloignée du boîtier d'appareil photo (101), un porte-lentille (135) dans lequel est disposée une lentille grossissante (116) étant disposé de manière coulissante dans la deuxième partie (113) du parasoleil (111).

2. Parasoleil selon la revendication 1, **caractérisé par** des moyens (114) pour fixer en position une longueur d'extension télescopique réglée suivant les besoins du parasoleil (111) entre ses parties (112 ; 113).

3. Parasoleil selon la revendication 1 ou 2, **caractérisé par** des moyens d'encliquetage (103, 104, 132, 133, 134) pour la fixation détachable au boîtier d'appareil photo (101).

4. Parasoleil selon la revendication 3, **caractérisé en ce**
**que** les moyens d'encliquetage comprennent deux barrettes d'encliquetage (103, 104) fixées l'une en face de l'autre sur les côtés de l'écran LCD (2) sur le boîtier d'appareil photo (101) et pourvues d'évidements ou de perçages traversants (105, 106, 107) destinés à recevoir des moyens de maintien ou d'encliquetage complémentaires (132, 133, 134) du parasoleil (111).

5. Parasoleil selon la revendication 4, **caractérisé en ce qu'**au moins une des deux barrettes d'encliquetage (104) fixées l'une en face de l'autre est réalisée avec effet de ressort au moins dans une région partielle (104A).

6. Parasoleil selon la revendication 5, **caractérisé en ce que** la région partielle (104A) de la barrette d'encliquetage (104) qui est réalisée avec effet de ressort présente une région de prise (8) de forme ergonomique pour supprimer le blocage.

7. Parasoleil selon l'une des revendications 1 à 6, **caractérisé en ce que** la lentille grossissante (16) présente une distance d'environ 95 mm de la surface d'image de l'écran LCD (2) dans une position de viseur.

8. Parasoleil selon l'une des revendications précédentes, **caractérisé en ce que** dans la deuxième partie du parasoleil (113), il est prévu une fente de guidage (122) s'étendant parallèlement à l'axe qui sert à actionner et guider la deuxième partie (113) par rapport à la première partie (112).

9. Parasoleil selon la revendication 8, **caractérisé en ce que** la fente de guidage (122) sert aussi à actionner et guider le porte-lentille (135) lors de son coulissement dans la deuxième partie (113) du parasoleil (111).

10. Parasoleil selon l'une des revendications précédentes, **caractérisé en ce qu'**il est réalisé sous forme de parasoleil extensible à deux étages.

11. Parasoleil selon l'une des revendications précédentes, **caractérisé en ce que** les parties coulissantes télescopiquement l'une par rapport à l'autre (112 ; 113) présentent une section rectangulaire.
